(19) Europäisches Patentamt / European Patent Office / Office européen des brevets

(11) **EP 3 076 622 A1**

(12) **EUROPEAN PATENT APPLICATION**
published in accordance with Art. 153(4) EPC

(43) Date of publication:
**05.10.2016 Bulletin 2016/40**

(51) Int Cl.:
***H04L 12/917*** (2013.01)

(21) Application number: **13899318.3**

(22) Date of filing: **12.12.2013**

(86) International application number:
**PCT/CN2013/089241**

(87) International publication number:
**WO 2015/085543 (18.06.2015 Gazette 2015/24)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Huawei Technologies Co., Ltd.
Longgang District
Shenzhen, Guangdong 518129 (CN)**

(72) Inventors:
• **ZHENG, Gang
  Shenzhen
  Guangdong 518129 (CN)**
• **LI, Sanzhong
  Shenzhen
  Guangdong 518129 (CN)**

(74) Representative: **Pfenning, Meinig & Partner mbB
Patent- und Rechtsanwälte
Joachimsthaler Straße 12
10719 Berlin (DE)**

(54) **METHOD AND DEVICE FOR ALLOCATING DYNAMIC BANDWIDTH IN PASSIVE OPTICAL NETWORK**

(57)    The present invention discloses a dynamic bandwidth assignment method and apparatus on a PON, where the method includes: determining length information of at least one data packet in a cache queue of a T-CONT; determining, according to the length information of the at least one data packet, a total length of at least one GEM frame that is corresponding to the at least one data packet and is obtained when the at least one data packet is separately encapsulated into a GEM frame; and sending a DBRu to an OLT according to the total length of the at least one GEM frame, so that the OLT assigns bandwidth to the T-CONT according to the DBRu. According to the dynamic bandwidth assignment method and apparatus in the embodiments of the present invention, bandwidth of a system can be saved, and overall performance of the system can be improved.

Determine length information of at least one data packet in a cache queue of a transmission container T-CONT — 110

Determine, according to the length information of the at least one data packet, a total length of at least one GEM frame that is corresponding to the at least one data packet and is obtained when the at least one data packet is separately encapsulated into a gigabit passive optical network encapsulation method GEM frame — 120

Send an uplink dynamic bandwidth report DBRu to an optical line terminal OLT according to the total length of the at least one GEM frame, so that the OLT assigns bandwidth to the T-CONT according to the DBRu — 130

FIG. 1

**Description**

**TECHNICAL FIELD**

Embodiments of the present invention relate to the communications field, and more specifically, to a dynamic bandwidth assignment method and apparatus on a passive optical network.

**BACKGROUND**

In a system of a passive optical network (Passive Optical Network, PON), such as a gigabit passive optical network (Gigabit Passive Optical Network, GPON) or a 10-Gigabit-capable passive optical network (10-Gigabit-capable Passive Optical Network, XG-PON), a dynamic bandwidth assignment (Dynamic Bandwidth Assignment, DBA) method is generally used for bandwidth assignment. DBA can be classified into two types: status reporting DBA (Status Reporting DBA, SR-DBA) and non-status reporting DBA (Non-Status Reporting DBA, NSR-DBA). Because an effect of dynamic bandwidth assignment by using an SR-DBA method is better than that by using an NSR-DBA method, the SR-DBA method is widely applied to the PON system.

In the SR-DBA method, after receiving uplink data from a user, an optical network unit (Optical Network Unit, ONU) needs to first store the data into a cache, and then use an uplink dynamic bandwidth report (uplink Dynamic Bandwidth Report, DBRu), which is sent to an optical line terminal (Optical Line Terminal, OLT), to carry a buffered-data amount in the ONU. The OLT assigns bandwidth to the ONU according to the buffered-data amount reported by the ONU. After obtaining bandwidth authorization from the OLT, the ONU encapsulates the data packet into a GPON encapsulation method (GPON Encapsulation Method, GEM) frame, and transmits the GEM frame on a PON network.

In the prior art, for a data packet of a type such as optical network terminal management and control interface (ONU Manage Control Interface, OMCI), time division multiplexing (Time Division Multiplexing, TDM), or Internet Protocol (Internet Protocol, IP), a buffered-data amount that is reported in a DBRu field by an ONU is corresponding to an actual total length of all data packets in a cache queue, but a length of a GEM frame actually transmitted by the ONU is equal to a sum of the length of the data packets and a length of a frame header of the GEM frame. Bandwidth actually required by the data packets exceeds bandwidth requested by the ONU from the OLT for the data packets, which may result in that bandwidth assigned by the OLT cannot meet a requirement for transmitting the data packets. Therefore, the data packets need to be transmitted in fragments for multiple times, which not only increases an extra GEM frame header overhead, but also prolongs a delay in data transmission, and finally affects overall performance of a PON system.

In addition, for an Ethernet data packet, a buffered-data amount that is reported in a DBRu field by the ONU is corresponding to a length of a data packet in a cache queue plus a length of a frame header of an Ethernet frame, but a length of a GEM frame actually transmitted by the ONU is equal to a sum of the length of the data packet and a length of a frame header of the GEM frame, where the length of the frame header of the Ethernet frame is 20 bytes, and is much greater than the length of the frame header of the GEM frame. Therefore, bandwidth actually required by the data packet is lower than bandwidth requested by the ONU from the OLT for the data packet, which results in that bandwidth assigned by the OLT to the data packet is higher than the bandwidth actually required by the data packet, thereby causing waste of transmission bandwidth and finally affecting overall performance of a PON system.

**SUMMARY**

Embodiments of the present invention provide a dynamic bandwidth assignment method and apparatus on a passive optical network PON, and a passive optical network system, so that bandwidth can be requested from an OLT according to an actual requirement of a T-CONT.

According to a first aspect, an embodiment of the present invention provides a dynamic bandwidth assignment method on a passive optical network PON, where the method includes: determining length information of at least one data packet in a cache queue of a transmission container T-CONT; determining, according to the length information of the at least one data packet, a total length of at least one GEM frame that is corresponding to the at least one data packet and is obtained when the at least one data packet is separately encapsulated into a gigabit passive optical network encapsulation method GEM frame; and sending an uplink dynamic bandwidth report DBRu to an optical line terminal OLT according to the total length of the at least one GEM frame, so that the OLT assigns bandwidth to the T-CONT according to the DBRu.

With reference to the first aspect, in a first possible implementation manner, the length information of the at least one data packet includes length information of each data packet in the at least one data packet; and the determining, according to the length information of the at least one data packet, a total length of at least one GEM frame that is corresponding to the at least one data packet and is obtained when the at least one data packet is separately encapsulated into a GEM frame includes: determining that a length of a GEM frame corresponding to each data packet in the at least one data packet is a sum of a length of each data packet and a length of a GEM frame header; and determining that the total length of the at least one GEM frame corresponding to the at least one data packet is equal to a sum of the lengths of the GEM frames corresponding to all the data packets.

With reference to the first aspect, in a second possible implementation manner, the length information of the at least one data packet includes total length information of the at least one data packet; and the determining, according to the length information of the at least one data packet, a total length of at least one GEM frame that is corresponding to the at least one data packet and is obtained when the at least one data packet is separately encapsulated into a GEM frame includes: determining that the total length of the at least one GEM frame corresponding to the at least one data packet is equal to a total length of the at least one data packet plus a product of a quantity of the at least one data packet and a length of a GEM frame header.

With reference to the first or the second possible implementation manner of the first aspect, in a third possible implementation manner, the PON is a gigabit passive optical network GPON, where the length of the GEM frame header is 5 bytes; or the PON is a 10-Gigabit-capable passive optical network XGPON, where the length of the GEM frame header is 8 bytes.

With reference to the first aspect or any one of the first to the third possible implementation manners of the first aspect, in a fourth possible implementation manner, before the sending an uplink dynamic bandwidth report DBRu to an OLT according to the total length of the at least one GEM frame, the method further includes: sending dynamic bandwidth report DBR reporting capability information of an optical network unit ONU to the OLT, where the DBR reporting capability information is used by the OLT to determine a DBR reporting policy for the ONU; and receiving the DBR reporting policy sent by the OLT, where the DBR reporting policy instructs the ONU to report and transmit, in the DBRu, a length of a GEM frame corresponding to the cache queue of the T-CONT in the ONU; and the sending an uplink dynamic bandwidth report DBRu to an OLT according to the total length of the at least one GEM frame includes: sending the uplink dynamic bandwidth report DBRu to the OLT according to the DBR reporting policy and the total length of the at least one GEM frame.

With reference to the first aspect or any one of the first to the fourth possible implementation manners of the first aspect, in a fifth possible implementation manner, a packet type of the at least one data packet includes at least one of the following types: optical network terminal management and control interface OMCI, Ethernet, time division multiplexing TDM, synchronous digital hierarchy SDH, Internet Protocol IP, and Multiprotocol Label Switching MPLS.

With reference to the first aspect or any one of the first to the fifth possible implementation manners of the first aspect, in a sixth possible implementation manner, each data packet in the at least one data packet is an integrated data packet or a data packet fragment.

According to a second aspect, a dynamic bandwidth assignment method on a passive optical network PON is provided, where the method includes: receiving an uplink dynamic bandwidth report DBRu sent by an optical network unit ONU, where the DBRu carries a length of a GEM frame corresponding to a data packet in a transmission container T-CONT of the ONU; and assigning bandwidth to the T-CONT according to the DBRu.

With reference to the second aspect, in a first possible implementation manner, the length of the GEM frame corresponding to the data packet is equal to a sum of a length of the data packet and a length of a GEM frame header.

With reference to the second aspect or the first possible implementation manner of the second aspect, in a second possible implementation manner, the assigning bandwidth to the T-CONT according to the DBRu includes: determining, according to the length that is of the GEM frame and is carried in the DBRu, bandwidth requested for the T-CONT; and assigning the bandwidth to the T-CONT according to bandwidth configured for the T-CONT, the bandwidth requested for the T-CONT, and bandwidth requested for another T-CONT.

With reference to the second aspect or the first or the second possible implementation manner of the second aspect, in a third possible implementation manner, before the receiving a DBRu sent by an ONU, the method further includes: receiving dynamic bandwidth report DBR reporting capability information sent by the ONU; determining a DBR reporting policy for the ONU according to the DBR reporting capability information, where the DBR reporting policy instructs the ONU to report, in the DBRu, a length of a GEM frame corresponding to a cache queue of the T-CONT in the ONU; and sending the DBR reporting policy to the ONU, so that the ONU reports the DBRu according to the DBR reporting policy.

According to a third aspect, a dynamic bandwidth assignment apparatus on a passive optical network PON is provided, where the apparatus includes: a first determining module, configured to determine length information of at least one data packet in a cache queue of a transmission container T-CONT; a second determining module, configured to determine, according to the length information that is of the at least one data packet and is determined by the first determining module, a total length of at least one GEM frame that is corresponding to the at least one data packet and is obtained when the at least one data packet is separately encapsulated into a gigabit passive optical network encapsulation method GEM frame; and a sending module, configured to send an uplink dynamic bandwidth report DBRu to an optical line terminal OLT according to the total length that is of the at least one GEM frame and is determined by the second determining module, so that the OLT assigns bandwidth to the T-CONT according to the DBRu.

With reference to the third aspect, in a first possible implementation manner, the length information of the at least one data packet includes length information of each data packet in the at least one data packet; and the second determining module is specifically configured to determine that a length of a GEM frame corresponding to each data packet in the at least one data packet is a sum of a length of each data packet and a length of a GEM frame header; and determine that the total length of the at least one GEM frame corresponding to the at least one data packet is equal to a sum of the lengths of the GEM frames corresponding to all the data packets.

With reference to the third aspect, in a second possible implementation manner, the length information of the at least one data packet includes total length information of the at least one data packet; and the second determining module is specifically configured to determine that the total length of the at least one GEM frame corresponding to the at least one data packet is equal to a total length of the at least one data packet plus a product of a quantity of the at least one data packet and a length of a GEM frame header.

With reference to the first or the second possible implementation manner of the third aspect, in a third possible implementation manner, the PON is a gigabit passive optical network GPON, where the length of the GEM frame header is 5 bytes; or the PON is a 10-Gigabit-capable passive optical network XGPON, where the length of the GEM frame header is 8 bytes.

With reference to the third aspect or any one of the first to the third possible implementation manners of the third aspect, in a fourth possible implementation manner, the sending module is further configured to: before sending the uplink dynamic bandwidth report DBRu to the OLT according to the total length that is of the at least one GEM frame and is determined by the second determining module, send dynamic bandwidth report DBR reporting capability information of an optical network unit ONU to the OLT, where the DBR reporting capability information is used by the OLT to determine a DBR reporting policy for the ONU; and the dynamic bandwidth assignment apparatus further includes: a receiving module, configured to receive the DBR reporting policy sent by the OLT, where the DBR reporting policy instructs the ONU to report and transmit, in the DBRu, a length of a GEM frame corresponding to the cache queue of the T-CONT in the ONU; where the sending module is further configured to send the uplink dynamic bandwidth report DBRu to the OLT according to the DBR reporting policy received by the receiving module and the total length that is of the at least one GEM frame and is determined by the second determining module.

With reference to the third aspect or any one of the first to the fourth possible implementation manners of the third aspect, in a fifth possible implementation manner, a packet type of the at least one data packet includes at least one of the following types: optical network terminal management and control interface OMCI, Ethernet, time division multiplexing TDM, synchronous digital hierarchy SDH, Internet Protocol IP, and Multiprotocol Label Switching MPLS.

With reference to the third aspect or any one of the first to the fifth possible implementation manners of the third aspect, in a sixth possible implementation manner, each data packet in the at least one data packet is an integrated data packet or a data packet fragment.

According to a fourth aspect, a dynamic bandwidth assignment apparatus on a passive optical network PON is provided, where the apparatus includes: a receiving module, configured to receive an uplink dynamic bandwidth report DBRu sent by an optical network unit ONU, where the DBRu carries a length of a GEM frame corresponding to a data packet in a transmission container T-CONT of the ONU; and an assignment module, configured to assign bandwidth to the T-CONT according to the DBRu received by the receiving module.

With reference to the fourth aspect, in a first possible implementation manner, the length of the GEM frame corresponding to the data packet is equal to a sum of a length of the data packet and a length of a GEM frame header.

With reference to the fourth aspect or the first possible implementation manner of the fourth aspect, in a second possible implementation manner, the assignment module includes: a determining unit, configured to determine, according to the length that is of the GEM frame and is carried in the DBRu, bandwidth requested for the T-CONT; and an assignment unit, configured to assign the bandwidth to the T-CONT according to bandwidth configured for the T-CONT, the bandwidth that is requested for the T-CONT and is determined by the determining unit, and bandwidth requested for another T-CONT.

With reference to the fourth aspect or the first or the second possible implementation manner of the fourth aspect, in a third possible implementation manner, the receiving module is further configured to: before receiving the DBRu sent by the ONU, receive dynamic bandwidth report DBR reporting capability information sent by the ONU; and the dynamic bandwidth assignment apparatus further includes: a determining module, configured to determine a DBR reporting policy for the ONU according to the DBR reporting capability information received by the receiving module, where the DBR reporting policy instructs the ONU to report, in the DBRu, a length of a GEM frame corresponding to a cache queue of the T-CONT in the ONU; and a sending module, configured to send the DBR reporting policy determined by the determining module to the ONU, so that the ONU reports the DBRu according to the DBR reporting policy.

According to a fifth aspect, a passive optical network system is provided, where the passive optical network includes an optical line terminal, an optical distribution network, and an optical network unit, where the optical line terminal is connected to the optical network unit by using the optical distribution network, the optical network unit includes the dynamic bandwidth assignment apparatus according to the third aspect or any one of the possible implementation manners of the third aspect, and the optical line terminal includes the dynamic bandwidth assignment apparatus according to the fourth aspect or any one of the possible implementation manners of the fourth aspect.

Based on the foregoing technical solutions, according to the dynamic bandwidth assignment method and apparatus, and the passive optical network system in the embodiments of the present invention, a length of a GEM frame corresponding to a data packet in a cache queue of a T-CONT is determined according to a length of the data packet, and a DBRu is sent to an OLT according to the length of the GEM frame, so that bandwidth requested for the T-CONT is the same as bandwidth occupied by the data packet in the T-CONT when the data packet is actually transmitted on a PON, bandwidth of a system is saved, and overall performance of the system is improved.

**BRIEF DESCRIPTION OF DRAWINGS**

To describe the technical solutions in the embodiments of the present invention more clearly, the following briefly describes the accompanying drawings required for describing the embodiments of the present invention or the prior art. Apparently, the accompanying drawings in the following description show merely some embodiments of the present invention, and a person of ordinary skill in the art may still derive other drawings from these accompanying drawings without creative efforts.

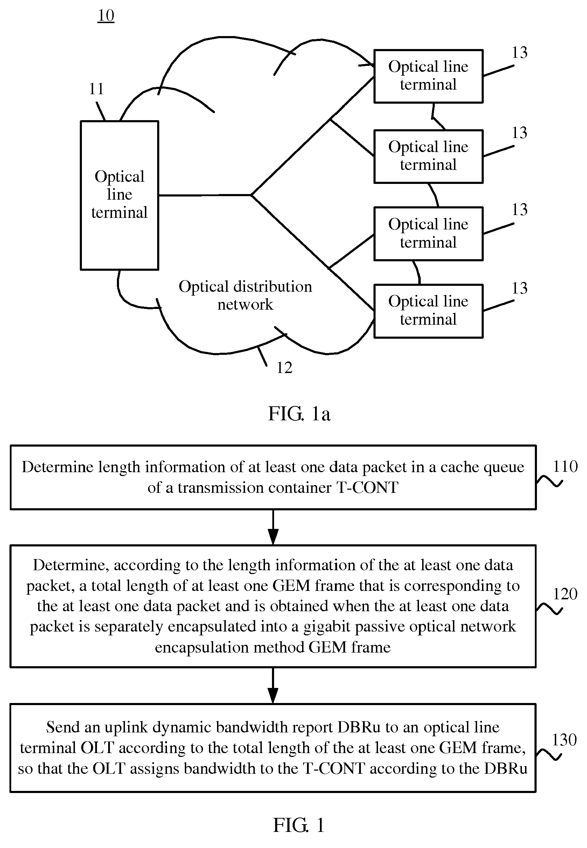

FIG. 1a is a schematic diagram of a networking structure of a PON system according to an embodiment of the present invention;

FIG. 1 is a schematic flowchart of a dynamic bandwidth assignment method on a PON according to an embodiment of the present invention;

FIG. 2 is another schematic flowchart of a dynamic bandwidth assignment method on a PON according to an embodiment of the present invention;

FIG. 3 is another schematic flowchart of a dynamic bandwidth assignment method on a PON according to an embodiment of the present invention;

FIG. 4 is a schematic diagram of a data packet in a T-CONT and of a GEM frame corresponding to the data packet according to an embodiment of the present invention;

FIG. 5 is a schematic flowchart of a dynamic bandwidth assignment method on a PON according to another embodiment of the present invention;

FIG. 6 is another schematic flowchart of a dynamic bandwidth assignment method on a PON according to another embodiment of the present invention;

FIG. 7 is a schematic block diagram of a dynamic bandwidth assignment apparatus on a PON according to an embodiment of the present invention;

FIG. 8 is a schematic block diagram of a dynamic bandwidth assignment apparatus on a PON according to an embodiment of the present invention;

FIG. 9 is another schematic block diagram of a dynamic bandwidth assignment apparatus on a PON according to an embodiment of the present invention;

FIG. 10 is another schematic block diagram of a dynamic bandwidth assignment apparatus on a PON according to another embodiment of the present invention;

FIG. 11 is a schematic block diagram of a dynamic bandwidth assignment apparatus on a PON according to still another embodiment of the present invention; and

FIG. 12 is a schematic block diagram of a dynamic bandwidth assignment apparatus on a PON according to still another embodiment of the present invention.

DESCRIPTION OF EMBODIMENTS

The following clearly and completely describes the technical solutions in the embodiments of the present invention with reference to the accompanying drawings in the embodiments of the present invention. Apparently, the described embodiments are some rather than all of the embodiments of the present invention. All other embodiments obtained by a person of ordinary skill in the art based on the embodiments of the present invention without creative efforts shall fall within the protection scope of the present invention.

It should be understood that the technical solutions in the embodiments of the present invention can be applied to various passive optical networks, such as a gigabit passive optical network (Gigabit Passive Optical Network, GPON), a 10-Gigabit passive optical network (10-Gigabit Passive Optical Network, XG-PON), and a next generation passive optical network (Next Generation Passive Optical Network, NGPON), which is not limited in the embodiments of the present invention.

FIG. 1a is a schematic diagram of an architecture of a passive optical network PON system according to an embodiment of the present invention. As shown in FIG. 1a, the PON system 10 may include at least one optical line terminal (OLT) 11, one optical distribution network (ODN) 12, and multiple optical network units (ONU) 13. Each OLT in the at least one OLT may manage at least one ONU, which is not limited in this embodiment of the present invention.

In the PON system, a direction from the OLT 11 to the ONU 13 is defined as a downlink direction, and a direction from the ONU 13 to the OLT 11 is defined as an uplink direction. In the downlink direction, the OLT 11 broadcasts, in a time division multiplexing (Time Division Multiplexing, TDM) manner, downlink data to the multiple ONUs 13 managed by the OLT 11, and each ONU 13 receives only data that carries an identifier of the ONU. In the uplink direction, the multiple ONUs 13 communicate with the OLT 11 in a time division multiple access (Time Division Multiple Access, TDMA) manner, and each ONU 13 sends uplink data strictly according to a timeslot assigned by the OLT 11 to the ONU 13. By using the foregoing mechanism, a downlink optical signal sent by the OLT 11 is a continuous optical signal, and an uplink optical signal sent by the ONU 13 is a burst optical signal.

The PON system 10 may be a communications network system that implements data distribution between the OLT 11 and the ONU 13 without a need of any active component. For example, in a specific embodiment, data distribution between the OLT 11 and the ONU 13 may be implemented by using a passive optical component (such as an optical splitter) in the ODN 12. In addition, the passive optical network system 10 may be an asynchronous transfer mode passive optical network (Asynchronous Transfer Mode Passive Optical Network, ATM PON) system or a broadband passive optical network (Bandwidth Passive Optical Network, BPON) system defined by an ITU-T G.983 standard, a gigabit passive optical network (GPON) system defined by an ITU-T G.984 standard, an Ethernet passive optical network (Ethernet Passive Optical Network, EPON) defined by an IEEE 802.3ah standard, or a next generation passive optical network (NGPON) such as an XGPON or a 10G EPON. Various passive optical network systems defined by the foregoing standards are incorporated in this application document by reference in their entireties.

The OLT 11 is generally located at a central office (Central Office, CO), and may manage at least one ONU 13 together and transmit data between the ONU 13 and an upper-layer network. Specifically, the OLT 11 may serve as a medium between the ONU 13 and the upper-layer network (such as the Internet or a public switched telephone network (Public Switched Telephone Network, PSTN)), forward, to the ONU 13, data received from the upper-layer network, and forward, to the upper-layer network, data received from the ONU 13. A specific structural configuration of the OLT 11 may vary with a specific type of the PON system 10. For example, in an embodiment, the OLT 11 may include a transmitter and a receiver, where the transmitter is configured to send a downlink continuous optical signal to the ONU 13, and the receiver is configured to receive an uplink burst optical signal from the ONU 13. The downlink optical signal and the uplink optical signal may be transmitted by using the ODN 12, which is not limited in this embodiment of the present invention.

The ONU 13 may be disposed at a user-side position (such as a customer premise) in a distributed manner. The ONU 13 may be a network device configured to communicate with the OLT 11 and with a user. Specifically, the ONU 13 may serve as a medium between the OLT 11 and the user. For example, the ONU 13 may forward, to the user, data received from the OLT 11, and forward, to the OLT 11, data received from the user. It should be understood that, a structure of the ONU 13 is similar to that of an optical network terminal (Optical Network Terminal, ONT). Therefore, in the solutions provided in this application document, the optical network unit and the optical network terminal are interchangeable.

The ODN 12 may be a data distribution network, and may include a fiber, an optical coupler, an optical splitter, and/or another device. In an embodiment, the fiber, the optical coupler, the optical splitter, and/or the another device may be passive optical components. Specifically, the fiber, the optical coupler, the optical splitter, and/or the another device may be components that perform data signal distribution between the OLT 11 and the ONU 13 without a need of power support. Specifically, an optical splitter (Splitter) is used as an example. The optical splitter may be connected to the OLT 11 by using a feeder fiber, and connected to the multiple ONUs 13 by using multiple distribution fibers, so as to implement a point-to-multipoint connection between the OLT 11 and the ONU 13. In addition, in another embodiment, the ODN 12 may further include one or more processing devices, such as an optical amplifier or a relay device (Relay device). In addition, the ODN 12 may be specifically extended from the OLT 11 to the multiple ONUs 13, or may be configured in any other point-to-multipoint structure, which is not limited in this embodiment of the present invention.

FIG. 1 is a schematic flowchart of a dynamic bandwidth assignment method on a PON according to an embodiment of the present invention. The method may be executed by an ONU, where the ONU may be the ONU 13 in the PON system 10 shown in FIG. 1a. As shown in FIG. 1, the method 100 includes:

S110. Determine length information of at least one data packet in a cache queue of a transmission container T-CONT.

The ONU may determine a length of each data packet in the at least one data packet in the T-CONT. Accordingly, the length information of the at least one data packet may include length information of each data packet in the at least one data packet. Optionally, the ONU may determine a total length of the at least one data packet in the T-CONT, that is, a sum of lengths of all data packets in the at least one data packet. Accordingly, the length information of the at least one data packet includes total length information of the at least one data packet, which is not limited in this embodiment of the present invention.

S120. Determine, according to the length information of the at least one data packet, a total length of at least one GEM frame that is corresponding to the at least one data packet and is obtained when the at least one data packet is separately encapsulated into a gigabit passive optical network encapsulation method GEM frame.

The at least one GEM frame corresponding to the at least one data packet may be a GEM frame set constituted by a GEM frame into which each data packet in the at least one data packet is encapsulated. Accordingly, the total length of the at least one GEM frame may be equal to a sum of lengths of all GEM frames in the GEM frame set, which is not limited in this embodiment of the present invention.

Optionally, the length of the at least one data packet and the total length of the at least one GEM frame may be in any length unit, for example, in a unit of byte, word, or block, which is not limited in this embodiment of the present invention.

S130. Send an uplink dynamic bandwidth report DBRu to an optical line terminal OLT according to the total length of the at least one GEM frame, so that the OLT assigns bandwidth to the T-CONT according to the DBRu.

If the total length that is of the at least one GEM frame and is determined by the ONU in S120 is in a length unit supported by the DBRu, the ONU may directly fill the DBRu with the total length of the at least one GEM frame. If a length unit of the total length that is of the at least one GEM frame and is determined by the ONU in S120 is inconsistent with a length unit supported by the DBRu, the ONU may determine, by means of unit conversion, a corresponding length value that exists when the total length of the at least one GEM frame is in the length unit supported by the DBRu, and fill the DBRu with the length value, and then the ONU sends the DBRu to the OLT.

A GPON is used as an example. The length unit supported by the DBRu is block (Block). If the total length that is of the at least one GEM frame and is determined by the ONU is in a unit of byte, the ONU may perform unit conversion by using the following formula:

$$R = ceil(\frac{L}{B}) \quad , \qquad\qquad (1)$$

where L represents the total length of the at least one GEM frame; B represents a size that is of a GEM block and is determined by the OLT and the ONU by means of negotiation, and a value of B is generally 48 bytes; and R represents a value filled in the DBRu, which is not limited in this embodiment of the present invention.

An XGPON is used as an example. The length unit supported by the DBRu is word (word). If the total length that is of the at least one GEM frame and is determined by the ONU is in a unit of byte, the ONU may perform unit conversion by using the following formula:

$$W = \left\lceil \frac{L}{4} \right\rceil \quad , \qquad\qquad (2)$$

where L represents the total length of the at least one GEM frame, and W represents a value filled in the DBRu, which is not limited in this embodiment of the present invention.

Optionally, in another embodiment, if there is no to-be-sent data packet in the cache queue of the T-CONT, a length of a data packet in the T-CONT and a length of a GEM frame corresponding to the data packet are both 0. Accordingly, the OUN may fill a bit, which is in the DBRu and corresponding to the T-CONT, with 0, which is not limited in this embodiment of the present invention.

According to the dynamic bandwidth assignment method in this embodiment of the present invention, a length of a GEM frame corresponding to a data packet in a cache queue of a T-CONT is determined according to a length of the data packet, and a DBRu is sent to an OLT according to the length of the GEM frame, so that bandwidth requested for the T-CONT is the same as bandwidth occupied by the data packet in the T-CONT when the data packet is actually transmitted on a PON, bandwidth of a system is saved, and overall performance of the system is improved.

Optionally, the length information of the at least one data packet includes the length information of each data packet in the at least one data packet.

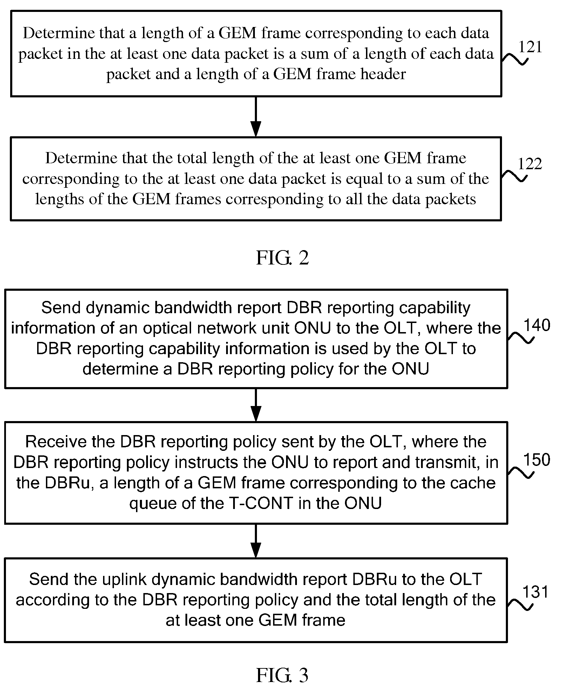

Accordingly, as shown in FIG. 2, the determining, according to the length information of the at least one data packet, a total length of at least one GEM frame that is corresponding to the at least one data packet and is obtained when the at least one data packet is separately encapsulated into a GEM frame in S120 includes:

S121. Determine that a length of a GEM frame corresponding to each data packet in the at least one data packet is a sum of a length of each data packet and a length of a GEM frame header.

S122. Determine that the total length of the at least one GEM frame corresponding to the at least one data packet is equal to a sum of the lengths of the GEM frames corresponding to all the data packets.

Specifically, the ONU first determines a length of each GEM frame in the GEM frame set, where the length of each GEM frame may be equal to a sum of a length of a data packet corresponding to the GEM frame and a length of a GEM frame header; and then uses a sum of the lengths of all the GEM frames in the GEM frame set as the total length of the at least one GEM frame. Optionally, if byte is used as the length unit, the length of the GEM frame header on the GPON is 5 bytes, and the length of the GEM frame header on the XGPON is 8 bytes, which is not limited in this embodiment of the present invention.

Optionally, in another embodiment, the length information of the at least one data packet includes the total length information of the at least one data packet.

Accordingly, the determining, according to the length information of the at least one data packet, a total length of at least one GEM frame that is corresponding to the at least one data packet and is obtained when the at least one data packet is separately encapsulated into a GEM frame in S120 includes:

S123. Determine that the total length of the at least one GEM frame corresponding to the at least one data packet is equal to a total length of the at least one data packet plus a product of a quantity of the at least one data packet and a length of a GEM frame header.

Specifically, the ONU may determine a total length of at least one GEM frame header corresponding to the at least one data packet, that is, the product of the length of the GEM frame header and the quantity of the at least one data packet; and then use a sum of the total length of the at least one GEM frame header and the total length of the at least one data packet as the total length of the at least one GEM frame, which is not limited in this embodiment of the present invention.

Optionally, in another embodiment, the ONU may report DBR reporting capability information of the ONU in advance. Accordingly, as shown in FIG. 3, before S130, the method 100 further includes:

S140. Send dynamic bandwidth report DBR reporting capability information of an optical network unit ONU to the OLT, where the DBR reporting capability information is used by the OLT to determine a DBR reporting policy for the ONU.

S150. Receive the DBR reporting policy sent by the OLT, where the DBR reporting policy instructs the ONU to report and transmit, in the DBRu, a length of a GEM frame corresponding to the cache queue of the T-CONT in the ONU.

Accordingly, the sending an uplink dynamic bandwidth report DBRu to an OLT according to the total length of the at least one GEM frame in S130 includes:

S131. Send the uplink dynamic bandwidth report DBRu to the OLT according to the DBR reporting policy and the total length of the at least one GEM frame.

The DBR reporting capability information is used to indicate a DBR reporting capability supported by the ONU. The ONU may support a reporting manner in the prior art, that is, the ONU reports a length of an Ethernet frame of an Ethernet data packet and reports an actual data length of another data packet; or may support a reporting manner provided in this embodiment of the present invention, that is, the ONU reports a length of a GEM frame corresponding to a data packet, which is not limited in this embodiment of the present invention.

Optionally, the OLT may determine the DBR reporting policy for the ONU according to a DBRu acceptance capability of the OLT and the DBR reporting capability of the ONU, where the DBR reporting policy is used to instruct the ONU to use which manner for DBR reporting, that is, whether to use the reporting manner in the prior art or the reporting manner provided in the present invention. Specifically, the OLT may instruct the ONU to use a reporting manner supported by both the OLT and the ONU for DBR reporting. If both the OLT and the ONU support only the reporting manner in the prior art, the OLT instructs the ONU to use the prior-art reporting manner for DBR reporting; if one of the OLT and the ONU supports both the prior-art reporting manner and the reporting manner provided in the present invention and the other supports only the prior-art reporting manner, the OLT may instruct the ONU to use the prior-art reporting manner for DBR reporting; if the OLT and the ONU support both the prior-art reporting manner and the reporting manner provided in the present invention, the OLT may instruct the ONU to use the reporting manner provided in the present invention for reporting, which is not limited in this embodiment of the present invention.

The data packet in this embodiment of the present invention may be of various packet types. Optionally, a packet type of the at least one data packet includes at least one of the following types: optical network terminal management and control interface OMCI, Ethernet, time division multiplexing TDM, synchronous digital hierarchy SDH, Internet Protocol IP, and Multiprotocol Label Switching MPLS.

In this embodiment of the present invention, the at least one data packet may include an integrated data packet or a data packet fragment. Accordingly, each data packet in the at least one data packet is an integrated data packet or a data packet fragment.

According to the dynamic bandwidth assignment method in this embodiment of the present invention, a length of a GEM frame corresponding to a data packet in a cache queue of a T-CONT is determined according to a length of the data packet, and a DBRu is sent to an OLT according to the length of the GEM frame, so that bandwidth requested for the T-CONT is the same as bandwidth occupied by the data packet in the T-CONT when the data packet is actually transmitted on a PON, bandwidth of a system is saved, and overall performance of the system is improved.

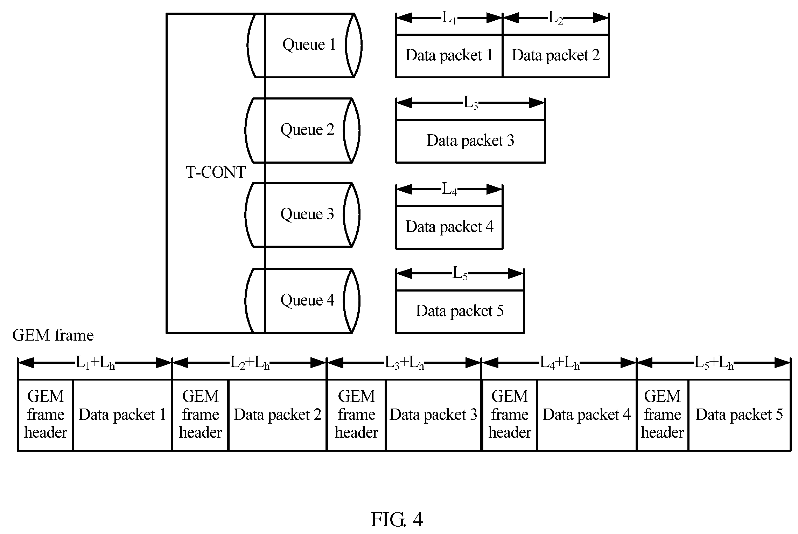

With reference to specific examples, the following describes in detail the dynamic bandwidth assignment method on a PON provided in this embodiment of the present invention. FIG. 4 is a schematic diagram of a data packet in a T-CONT and of a GEM frame corresponding to the data packet according to an embodiment of the present invention. For ease of description, byte is used as a length unit in an example shown in FIG. 4, which is not limited in this embodiment of the present invention.

In FIG. 4, it is assumed that a T-CONT of an ONU includes four cache queues, which are queues 1 to 4, and five data packets (packets 1 to 5) in total exist in the four queues. A process in which the ONU requests bandwidth from an OLT is as follows:

The ONU determines a length $L_i$ of each data packet in the four cache queues, where i=1, ..., 5. The ONU increases the length of each data packet in the four cache queues by a length of a GEM frame header, to obtain a length ($L_i + L_h$) obtained when each data packet in the four cache queues is encapsulated into a GEM frame, where i=1, ..., 5, and $L_h$ is the length of the GEM frame header. Optionally, in a GPON system, $L_h$=5 bytes, and on an XGPON, the length of the GEM frame header $L_h$=8 bytes. The ONU uses, as a total data length L of the T-CONT, a sum of lengths of all GEM frames obtained when each data packet is encapsulated into a GEM frame, where

$$L = \sum_{i=1}^{5} (L_i + L_h)$$

and determines, according to the total data length of the T-CONT, a value filled in a DBRu. Specifically, in the GPON system, the ONU converts, by using the formula (1), the total data length of the T-CONT into a value in a unit of block, and fills the DBRu with the value obtained by means of conversion. In an XGPON system, the ONU converts, by using the formula (2), the total data length of the T-CONT into a value in a unit of word, and fills the DBRu with the value obtained by means of conversion. Finally, the ONU sends the DBRu to the OLT.

According to the dynamic bandwidth assignment method in this embodiment of the present invention, a length of a GEM frame corresponding to a data packet in a cache queue of a T-CONT is determined according to a length of the data packet, and a DBRu is sent to an OLT according to the length of the GEM frame, so that bandwidth requested for the T-CONT is the same as bandwidth occupied by the data packet in the T-CONT when the data packet is actually transmitted on a PON, bandwidth of a system is saved, and overall performance of the system is improved.

It should be understood that the example shown in FIG. 4 is merely intended to help a person skilled in the art better understand the embodiments of the present invention, instead of limiting the scope of the embodiments of the present invention. A person skilled in the art certainly can make various equivalent modifications or changes according to the example shown in FIG. 4, and such modifications or changes also fall within the scope of the embodiments of the present invention.

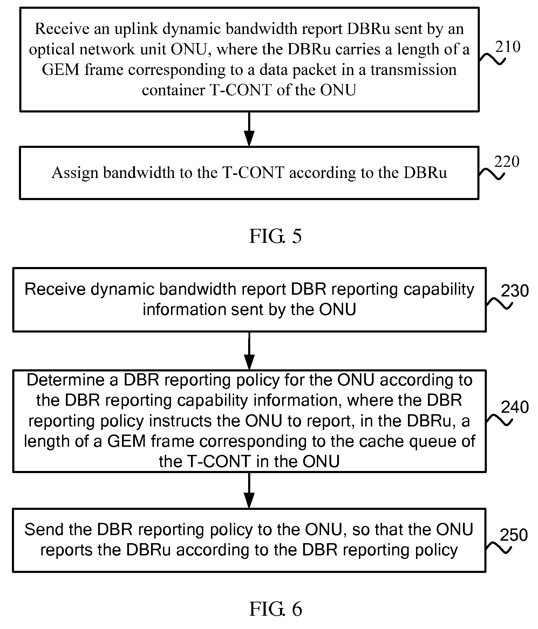

With reference to FIG. 1 to FIG. 4, the foregoing describes in detail, from a perspective of an ONU, the dynamic bandwidth assignment method on a PON according to the embodiments of the present invention. With reference to FIG. 5 to FIG. 6, the following describes in detail, from a perspective of an OLT, the dynamic bandwidth assignment method on a PON according to the embodiments of the present invention.

FIG. 5 is a schematic flowchart of a dynamic bandwidth assignment method 200 on a PON according to another embodiment of the present invention. The method may be executed by an OLT, where the OLT may be the OLT 11 in the PON system 10 shown in FIG. 1a. As shown in FIG. 5, the method 200 includes:

S210. Receive an uplink dynamic bandwidth report DBRu sent by an optical network unit ONU, where the DBRu carries a length of a GEM frame corresponding to a data packet in a transmission container T-CONT of the ONU. S220. Assign bandwidth to the T-CONT according to the DBRu.

According to the dynamic bandwidth assignment method in this embodiment of the present invention, a length of a GEM frame corresponding to a data packet in a cache queue of a T-CONT is determined according to a length of the data packet, and a DBRu is sent to an OLT according to the length of the GEM frame, so that bandwidth requested for the T-CONT is the same as bandwidth occupied by the data packet in the T-CONT when the data packet is actually transmitted on a PON, bandwidth of a system is saved, and overall performance of the system is improved.

Optionally, in S210, the ONU may include at least one T-CONT. The DBRu may carry total data packets of all T-CONTs in the at least one T-CONT, that is, a sum of length of GEM frame corresponding to data packets in a cache queue of all T-CONTs. The cache queue of each T-CONT may include at least one data packet, and the length of the GEM frame corresponding to the data packet of each T-CONT may refer to a total length of at least one GEM frame corresponding to the at least one data packet, where the at least one GEM frame corresponding to the at least one data packet may refer to a GEM frame set constituted by a GEM frame corresponding to each data packet in the at least one data packet, and the total length of the at least one GEM frame may be a sum of lengths of all GEM frames in the GEM frame set, which is not limited in this embodiment of the present invention.

Optionally, the length of the GEM frame corresponding to the data packet is equal to a sum of a length of the data packet and a length of a GEM frame header.

Optionally, in another embodiment, the assigning bandwidth to the T-CONT according to the DBRu in S220 includes:

S221. Determine, according to the length that is of the GEM frame and is carried in the DBRu, bandwidth requested for the T-CONT.
S222. Assign the bandwidth to the T-CONT according to bandwidth configured for the T-CONT, the bandwidth requested for the T-CONT, and bandwidth requested for another T-CONT.

In S222, the OLT may assign the bandwidth to the T-CONT according to a priority sequence between the T-CONT and the another T-CONT. If current available bandwidth cannot meet requests from all T-CONTs, the OLT may preferentially assign bandwidth to a T-CONT with a higher priority, and for multiple T-CONTs that have a same priority, the OLT may assign bandwidth to each of the T-CONTs according to a weight factor, which is not limited in this embodiment of the present invention.

Optionally, in another embodiment, as shown in FIG. 6, before S210, the method 200 further includes:

S230. Receive dynamic bandwidth report DBR reporting capability information sent by the ONU.
S240. Determine a DBR reporting policy for the ONU according to the DBR reporting capability information, where the DBR reporting policy instructs the ONU to report, in the DBRu, a length of a GEM frame corresponding to a cache queue of the T-CONT in the ONU.
S250. Send the DBR reporting policy to the ONU, so that the ONU reports the DBRu according to the DBR reporting policy.

The DBR reporting capability information is used to indicate a DBR reporting capability supported by the ONU. The ONU may support a reporting manner in the prior art, that is, the ONU reports a length of an Ethernet frame of an Ethernet data packet and reports an actual data length of another data packet; or may support a reporting manner provided in this embodiment of the present invention, that is, the ONU reports a length of a GEM frame corresponding to a data packet, which is not limited in this embodiment of the present invention.

Optionally, the OLT may determine the DBR reporting policy for the ONU according to a DBRu acceptance capability of the OLT and the DBR reporting capability of the ONU, where the DBR reporting policy is used to instruct the ONU to use which manner for DBR reporting, that is, whether to use the reporting manner in the prior art or the reporting manner provided in the present invention. Specifically, the OLT may instruct the ONU to use a reporting manner supported by both the OLT and the ONU for DBR reporting. If both the OLT and the ONU support only the reporting manner in the prior art, the OLT instructs the ONU to use the prior-art reporting manner for DBR reporting; if one of the OLT and the ONU supports both the prior-art reporting manner and the reporting manner provided in the present invention and the other supports only the prior-art reporting manner, the OLT may instruct the ONU to use the prior-art reporting manner for DBR reporting; if the OLT and the ONU support both the prior-art reporting manner and the reporting manner provided in the present invention, the OLT may instruct the ONU to use the reporting manner provided in the present invention for reporting, which is not limited in this embodiment of the present invention.

According to the dynamic bandwidth assignment method in this embodiment of the present invention, a length of a GEM frame corresponding to a data packet in a cache queue of a T-CONT is determined according to a length of the data packet, and a DBRu is sent to an OLT according to the length of the GEM frame, so that bandwidth requested for the T-CONT is the same as bandwidth occupied by the data packet in the T-CONT when the data packet is actually transmitted on a PON, bandwidth of a system is saved, and overall performance of the system is improved.

It should be understood that sequence numbers of the foregoing processes do not mean execution sequences. The execution sequences of the processes should be determined according to functions and internal logic of the processes, and should not be construed as any limitation on implementation processes of the embodiments of the present invention.

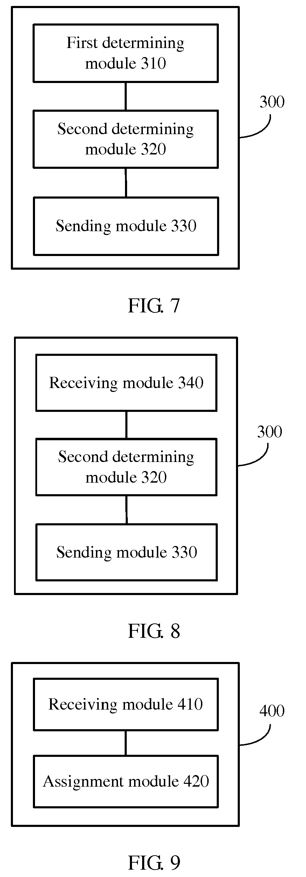

With reference to FIG. 1 to FIG. 6, the foregoing describes in detail the dynamic bandwidth assignment method on a PON according to the embodiments of the present invention. With reference to FIG. 7 to FIG. 12, the following describes a dynamic bandwidth assignment apparatus on a PON according to the embodiments of the present invention.

FIG. 7 is a schematic block diagram of a dynamic bandwidth assignment apparatus 300 on a PON according to an embodiment of the present invention. The dynamic bandwidth assignment apparatus 300 may be an ONU, which is not limited in this embodiment of the present invention. As shown in FIG. 7, the dynamic bandwidth assignment apparatus 300 includes:

a first determining module 310, configured to determine length information of at least one data packet in a cache queue of a transmission container T-CONT;

a second determining module 320, configured to determine, according to the length information that is of the at least one data packet and is determined by the first determining module 310, a total length of at least one GEM frame that is corresponding to the at least one data packet and is obtained when the at least one data packet is separately encapsulated into a gigabit passive optical network encapsulation method GEM frame; and

a sending module 330, configured to send an uplink dynamic bandwidth report DBRu to an optical line terminal OLT according to the total length that is of the at least one GEM frame and is determined by the second determining module 320, so that the OLT assigns bandwidth to the T-CONT according to the DBRu.

According to the dynamic bandwidth assignment apparatus in this embodiment of the present invention, a length of a GEM frame corresponding to a data packet in a cache queue of a T-CONT is determined according to a length of the data packet, and a DBRu is sent to an OLT according to the length of the GEM frame, so that bandwidth requested for the T-CONT is the same as bandwidth occupied by the data packet in the T-CONT when the data packet is actually transmitted on a PON, bandwidth of a system is saved, and overall performance of the system is improved.

In this embodiment of the present invention, the at least one GEM frame corresponding to the at least one data packet may be a GEM frame set constituted by a GEM frame into which each data packet in the at least one data packet is encapsulated. Accordingly, the total length of the at least one GEM frame may be equal to a sum of lengths of all GEM frames in the GEM frame set, which is not limited in this embodiment of the present invention.

Optionally, the length of the at least one data packet and the total length of the at least one GEM frame may be in any length unit, for example, in a unit of byte, word, or block, which is not limited in this embodiment of the present invention.

Optionally, the dynamic bandwidth assignment apparatus may further include: a filling module, configured to fill the DBRu with a value according to the total length that is of the at least one GEM frame and is determined by the second determining module 320. If the total length that is of the at least one GEM frame and is determined by the second determining module 320 is in a length unit supported by the DBRu, the filling module may directly fill the DBRu with the total length of the at least one GEM frame. If a length unit of the total length that is of the at least one GEM frame and is determined by the second determining module 320 is inconsistent with a length unit supported by the DBRu, the filling module may determine, by means of unit conversion, a corresponding length value that exists when the total length of the at least one GEM frame is in the length unit supported by the DBRu, and fill the DBRu with the length value, and then the sending module 330 sends the DBRu to the OLT.

Optionally, the length information of the at least one data packet includes length information of each data packet in the at least one data packet.

Accordingly, the second determining module 320 is specifically configured to determine that a length of a GEM frame corresponding to each data packet in the at least one data packet is a sum of a length of each data packet and a length of a GEM frame header; and determine that the total length of the at least one GEM frame corresponding to the at least one data packet is equal to a sum of the lengths of the GEM frames corresponding to all the data packets.

Optionally, in another embodiment, the length information of the at least one data packet includes total length information of the at least one data packet.

Accordingly, the second determining module 320 is specifically configured to:

determine that the total length of the at least one GEM frame corresponding to the at least one data packet is equal to a total length of the at least one data packet plus a product of a quantity of the at least one data packet and a length of a GEM frame header.

Optionally, in another embodiment, the PON is a gigabit passive optical network GPON, where the length of the GEM frame header is 5 bytes; or

the PON is a 10-Gigabit passive optical network XGPON, where the length of the GEM frame header is 8 bytes.

Optionally, in another embodiment, the sending module 330 is further configured to:

before sending the uplink dynamic bandwidth report DBRu to the OLT according to the total length that is of the at least one GEM frame and is determined by the second determining module 320, send dynamic bandwidth report DBR reporting capability information of an optical network unit ONU to the OLT, where the DBR reporting capability information is used by the OLT to determine a DBR reporting policy for the ONU.

Accordingly, as shown in FIG. 8, the dynamic bandwidth assignment apparatus 300 further includes:

a receiving module 340, configured to receive the DBR reporting policy sent by the OLT, where the DBR reporting policy instructs the ONU to report and transmit, in the DBRu, a length of a GEM frame corresponding to the cache queue of the T-CONT in the ONU.

The sending module 330 is further configured to send the uplink dynamic bandwidth report DBRu to the OLT according to the DBR reporting policy received by the receiving module 340 and the total length that is of the at least one GEM frame and is determined by the second determining module 320.

Optionally, in another embodiment, a packet type of the at least one data packet includes at least one of the following types: optical network terminal management and control interface OMCI, Ethernet, time division multiplexing TDM, synchronous digital hierarchy SDH, Internet Protocol IP, and Multiprotocol Label Switching MPLS.

Optionally, in another embodiment, each data packet in the at least one data packet is an integrated data packet or a data packet fragment.

The dynamic bandwidth assignment apparatus 300 according to this embodiment of the present invention may be corresponding to the ONU in the dynamic bandwidth assignment method in the embodiments of the present invention, and the foregoing and other operations and/or functions of the modules in the dynamic bandwidth assignment apparatus 300 are separately used to implement corresponding procedures of the methods shown in FIG. 1 to FIG. 4. For brevity, details are not described herein again.

According to the dynamic bandwidth assignment apparatus in this embodiment of the present invention, a length of a GEM frame corresponding to a data packet in a cache queue of a T-CONT is determined according to a length of the data packet, and a DBRu is sent to an OLT according to the length of the GEM frame, so that bandwidth requested for the T-CONT is the same as bandwidth occupied by the data packet in the T-CONT when the data packet is actually transmitted on a PON, bandwidth of a system is saved, and overall performance of the system is improved.

FIG. 9 is a schematic block diagram of a dynamic bandwidth assignment apparatus 400 on a PON according to another embodiment of the present invention. The dynamic bandwidth assignment apparatus 400 may be an OLT, which is not limited in this embodiment of the present invention. As shown in FIG. 9, the dynamic bandwidth assignment apparatus 400 includes:

a receiving module 410, configured to receive an uplink dynamic bandwidth report DBRu sent by an optical network unit ONU, where the DBRu carries a length of a GEM frame corresponding to a data packet in a transmission container T-CONT of the ONU; and
an assignment module 420, configured to assign bandwidth to the T-CONT according to the DBRu received by the receiving module 410.

According to the dynamic bandwidth assignment apparatus in this embodiment of the present invention, a length of a GEM frame corresponding to a data packet in a cache queue of a T-CONT is determined according to a length of the data packet, and a DBRu is sent to an OLT according to the length of the GEM frame, so that bandwidth requested for the T-CONT is the same as bandwidth occupied by the data packet in the T-CONT when the data packet is actually transmitted on a PON, bandwidth of a system is saved, and overall performance of the system is improved.

Optionally, the length of the GEM frame corresponding to the data packet is equal to a sum of a length of the data packet and a length of a GEM frame header.

Optionally, in another embodiment, the assignment module 420 includes:

a determining unit 421, configured to determine, according to the length that is of the GEM frame and is carried in the DBRu, bandwidth requested for the T-CONT; and
an assignment unit 422, configured to assign the bandwidth to the T-CONT according to bandwidth configured for the T-CONT, the bandwidth that is requested for the T-CONT and is determined by the determining unit 421, and bandwidth requested for another T-CONT.

Optionally, in another embodiment, the receiving module 410 is further configured to: before receiving the DBRu sent by the ONU, receive dynamic bandwidth report DBR reporting capability information sent by the ONU.

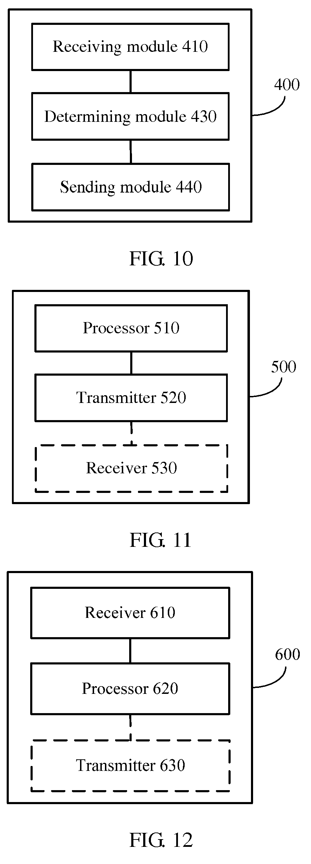

Accordingly, as shown in FIG. 10, the dynamic bandwidth assignment apparatus 400 further includes:

a determining module 430, configured to determine a DBR reporting policy for the ONU according to the DBR reporting capability information received by the receiving module 410, where the DBR reporting policy instructs the ONU to report, in the DBRu, a length of a GEM frame corresponding to a cache queue of the T-CONT in the ONU; and a sending module 440, configured to send the DBR reporting policy determined by the determining module 430 to the ONU, so that the ONU reports the DBRu according to the DBR reporting policy.

The dynamic bandwidth assignment apparatus 400 according to this embodiment of the present invention may be corresponding to the ONU in the dynamic bandwidth assignment method in the embodiments of the present invention, and the foregoing and other operations and/or functions of the modules in the dynamic bandwidth assignment apparatus 400 are separately used to implement corresponding procedures of the methods shown in FIG. 5 to FIG. 6. For brevity, details are not described herein again.

According to the dynamic bandwidth assignment apparatus in this embodiment of the present invention, a length of a GEM frame corresponding to a data packet in a cache queue of a T-CONT is determined according to a length of the data packet, and a DBRu is sent to an OLT according to the length of the GEM frame, so that bandwidth requested for the T-CONT is the same as bandwidth occupied by the data packet in the T-CONT when the data packet is actually transmitted on a PON, bandwidth of a system is saved, and overall performance of the system is improved.

An embodiment of the present invention further provides a passive optical network system. FIG. 1a is a schematic diagram of a networking architecture of the passive optical network system. As shown in FIG. 1a, the PON system includes an optical line terminal OLT 11, an optical distribution network ODN 12, and an optical network unit ONU 13. The OLT 11 is connected to the ONU 13 by using the ODN 12. The ONU 13 includes the dynamic bandwidth configuration apparatus 300 shown in FIG. 7 or FIG. 8. The OLT 11 includes the dynamic bandwidth configuration apparatus 400 shown in FIG. 9 or FIG. 10.

Specifically, the ONU 13 is configured to determine length information of at least one data packet in a cache queue of a transmission container T-CONT; determine, according to the length information of the at least one data packet, a total length of at least one GEM frame that is corresponding to the at least one data packet and is obtained when the at least one data packet is separately encapsulated into a GEM frame; and send an uplink dynamic bandwidth report DBRu to the OLT 11 according to the total length of the at least one GEM frame by using the ODN 12.

The OLT 11 is configured to receive the DBRu that is sent by the ONU 13 by using the ODN 12, where the DBRu carries a length of a GEM frame corresponding to a data packet in the transmission container T-CONT of the ONU 13; and assign bandwidth to the T-CONT according to the DBRu.

Optionally, the passive optical network system may include multiple ONUs 13, at least one OLT 11, and one ODN 12. Each OLT 11 in the at least one OLT 11 may interact with the at least one ONU 13 by using the ODN 12. For specific structures of the passive optical network system 10, the ONU 13, and the OLT 11, refer to descriptions, in the foregoing embodiments, of the dynamic bandwidth assignment apparatus 300 shown in FIG. 1a, FIG. 7, or FIG. 8 and of the dynamic bandwidth assignment apparatus 400 shown in FIG. 9 or FIG. 10. For brevity, details are not described herein again.

FIG. 11 is a schematic block diagram of a dynamic bandwidth assignment apparatus 500 on a PON according to still another embodiment of the present invention. The dynamic bandwidth assignment apparatus 500 may be an ONU, which is not limited in this embodiment of the present invention. As shown in FIG. 11, the dynamic bandwidth apparatus 500 includes a processor 510 and a transmitter 520. Specifically, the processor 510 is configured to determine length information of at least one data packet in a cache queue of a transmission container T-CONT; and determine, according to the length information of the at least one data packet, a total length of at least one GEM frame that is corresponding to the at least one data packet and is obtained when the at least one data packet is separately encapsulated into a gigabit passive optical network encapsulation method GEM frame. The transmitter 520 is configured to send an uplink dynamic bandwidth report DBRu to an optical line terminal OLT according to the total length that is of the at least one GEM frame and is determined by the processor 510, so that the OLT assigns bandwidth to the T-CONT according to the DBRu.

According to the dynamic bandwidth assignment apparatus in this embodiment of the present invention, a length of a GEM frame corresponding to a data packet in a cache queue of a T-CONT is determined according to a length of the data packet, and a DBRu is sent to an OLT according to the length of the GEM frame, so that bandwidth requested for the T-CONT is the same as bandwidth occupied by the data packet in the T-CONT when the data packet is actually transmitted on a PON, bandwidth of a system is saved, and overall performance of the system is improved.

It should be understood that, in this embodiment of the present invention, the processor 510 may be a central processing unit (Central Processing Unit, "CPU" for short), or the processor 510 may be another general-purpose processor, a digital signal processor (DSP), an application-specific integrated circuit (ASIC), a field-programmable gate array (FPGA) or another programmable logical device, a discrete gate or a transistor logic device, a discrete hardware component, or the like. The general-purpose processor may be a microprocessor or the processor may be any conventional processor, or the like.

In an implementation process, the steps in the foregoing methods may be completed by using an integrated logic circuit of hardware in the processor 510 or an instruction in a form of software. Steps of the methods disclosed with reference to the embodiments of the present invention may be directly executed and completed by means of a hardware processor, or may be executed and completed by using a combination of a hardware module and a software module in the processor. The software module may be located in a mature storage medium in the field, such as a random access memory, a flash memory, a read-only memory, a programmable read-only memory, an electrically-erasable programmable memory, or a register. The processor 510 reads information in the storage medium and completes the steps of the foregoing method in combination with hardware in the processor 510. To avoid repetition, details are not described herein again.

Optionally, the length information of the at least one data packet includes length information of each data packet in the at least one data packet.

Accordingly, the processor 510 is specifically configured to determine that a length of a GEM frame corresponding to each data packet in the at least one data packet is a sum of a length of each data packet and a length of a GEM frame header; and determine that the total length of the at least one GEM frame corresponding to the at least one data packet is equal to a sum of the lengths of the GEM frames corresponding to all the data packets.

Optionally, in another embodiment, the length information of the at least one data packet includes total length information of the at least one data packet.

Accordingly, the processor 510 is specifically configured to:

determine that the total length of the at least one GEM frame corresponding to the at least one data packet is equal to a total length of the at least one data packet plus a product of a quantity of the at least one data packet and a length of a GEM frame header.

Optionally, in another embodiment, the PON is a gigabit passive optical network GPON, where the length of the GEM frame header is 5 bytes; or
the PON is a 10-Gigabit passive optical network XGPON, where the length of the GEM frame header is 8 bytes.

Optionally, in another embodiment, the transmitter 520 is further configured to:

before sending the uplink dynamic bandwidth report DBRu to the OLT according to the total length that is of the at least one GEM frame and is determined by the processor 510, send dynamic bandwidth report DBR reporting capability information of an optical network unit ONU to the OLT, where the DBR reporting capability information is used by the OLT to determine a DBR reporting policy for the ONU.

Accordingly, as shown in FIG. 11, the dynamic bandwidth assignment apparatus 500 further includes:

a receiver 530, configured to receive the DBR reporting policy sent by the OLT, where the DBR reporting policy instructs the ONU to report and transmit, in the DBRu, a length of a GEM frame corresponding to the cache queue of the T-CONT in the ONU.

The transmitter 520 is further configured to send the uplink dynamic bandwidth report DBRu to the OLT according to the DBR reporting policy received by the receiver 530 and the total length that is of the at least one GEM frame and is determined by the second determining module 320.

Optionally, in another embodiment, a packet type of the at least one data packet includes at least one of the following types: optical network terminal management and control interface OMCI, Ethernet, time division multiplexing TDM, synchronous digital hierarchy SDH, Internet Protocol IP, and Multiprotocol Label Switching MPLS.

Optionally, in another embodiment, each data packet in the at least one data packet is an integrated data packet or a data packet fragment.

The dynamic bandwidth assignment apparatus 500 according to this embodiment of the present invention may be corresponding to the ONU in the dynamic bandwidth assignment method in the embodiments of the present invention, and the foregoing and other operations and/or functions of the modules in the dynamic bandwidth assignment apparatus 500 are separately used to implement corresponding procedures of the methods shown in FIG. 1 to FIG. 4. For brevity, details are not described herein again.

According to the dynamic bandwidth assignment apparatus in this embodiment of the present invention, a length of a GEM frame corresponding to a data packet in a cache queue of a T-CONT is determined according to a length of the data packet, and a DBRu is sent to an OLT according to the length of the GEM frame, so that bandwidth requested for the T-CONT is the same as bandwidth occupied by the data packet in the T-CONT when the data packet is actually transmitted on a PON, bandwidth of a system is saved, and overall performance of the system is improved.

FIG. 12 is a schematic block diagram of a dynamic bandwidth assignment apparatus 600 on a PON according to another embodiment of the present invention. The dynamic bandwidth assignment apparatus 600 may be an OLT, which is not limited in this embodiment of the present invention. As shown in FIG. 12, the dynamic bandwidth assignment apparatus 600 includes a receiver 610 and a processor 620. Specifically, the receiver 610 is configured to receive an uplink dynamic bandwidth report DBRu sent by an optical network unit ONU, where the DBRu carries a length of a GEM frame corresponding to a data packet in a transmission container T-CONT of the ONU. The processor 620 is configured to assign bandwidth to the T-CONT according to the DBRu received by the receiver 610.

According to the dynamic bandwidth assignment apparatus in this embodiment of the present invention, a length of a GEM frame corresponding to a data packet in a cache queue of a T-CONT is determined according to a length of the data packet, and a DBRu is sent to an OLT according to the length of the GEM frame, so that bandwidth requested for the T-CONT is the same as bandwidth occupied by the data packet in the T-CONT when the data packet is actually transmitted on a PON, bandwidth of a system is saved, and overall performance of the system is improved.

It should be understood that, in this embodiment of the present invention, the processor 610 may be a central processing unit (Central Processing Unit, "CPU" for short), or the processor 610 may be another general-purpose processor, a digital signal processor (DSP), an application-specific integrated circuit (ASIC), a field-programmable gate array (FPGA) or another programmable logical device, a discrete gate or a transistor logic device, a discrete hardware component, or the like. The general-purpose processor may be a microprocessor or the processor may be any conventional processor, or the like.

In an implementation process, the steps in the foregoing methods may be completed by using an integrated logic circuit of hardware in the processor 610 or an instruction in a form of software. Steps of the methods disclosed with reference to the embodiments of the present invention may be directly executed and completed by means of a hardware processor, or may be executed and completed by using a combination of a hardware module and a software module in the processor. The software module may be located in a mature storage medium in the field, such as a random access memory, a flash memory, a read-only memory, a programmable read-only memory, an electrically-erasable programmable memory, or a register. The processor 610 reads information in the storage medium and completes the steps of the foregoing method in combination with hardware in the processor 610. To avoid repetition, details are not described herein again.

Optionally, the length of the GEM frame corresponding to the data packet is equal to a sum of a length of the data packet and a length of a GEM frame header.

Optionally, in another embodiment, the processor 620 is specifically configured to determine, according to the length that is of the GEM frame and is carried in the DBRu, bandwidth requested for the T-CONT; and assign the bandwidth to the T-CONT according to bandwidth configured for the T-CONT, the bandwidth requested for the T-CONT, and bandwidth requested for another T-CONT.

Optionally, in another embodiment, the receiver 610 is further configured to: before receiving the DBRu sent by the ONU, receive dynamic bandwidth report DBR reporting capability information sent by the ONU.

The processor 620 is further configured to determine a DBR reporting policy for the ONU according to the DBR reporting capability information received by the receiver 610, where the DBR reporting policy instructs the ONU to report, in the DBRu, a length of a GEM frame corresponding to a cache queue of the T-CONT in the ONU.

Accordingly, as shown in FIG. 12, the dynamic bandwidth assignment apparatus 600 further includes:

a transmitter 630, configured to send the DBR reporting policy determined by the processor 620 to the ONU, so that the ONU reports the DBRu according to the DBR reporting policy.

The dynamic bandwidth assignment apparatus 600 according to this embodiment of the present invention may be corresponding to the ONU in the dynamic bandwidth assignment method in the embodiments of the present invention, and the foregoing and other operations and/or functions of the modules in the dynamic bandwidth assignment apparatus 600 are separately used to implement corresponding procedures of the methods shown in FIG. 5 to FIG. 6. For brevity, details are not described herein again.

According to the dynamic bandwidth assignment apparatus in this embodiment of the present invention, a length of a GEM frame corresponding to a data packet in a cache queue of a T-CONT is determined according to a length of the data packet, and a DBRu is sent to an OLT according to the length of the GEM frame, so that bandwidth requested for the T-CONT is the same as bandwidth occupied by the data packet in the T-CONT when the data packet is actually transmitted on a PON, bandwidth of a system is saved, and overall performance of the system is improved.

An embodiment of the present invention further provides a passive optical network system. FIG. 1a is a schematic diagram of a networking architecture of the passive optical network system. As shown in FIG. 1a, the PON system includes an optical line terminal OLT 11, an optical distribution network ODN 12, and an optical network unit ONU 13. The OLT 11 is connected to the ONU 13 by using the ODN 12. The ONU 13 includes the dynamic bandwidth configuration apparatus 500 shown in FIG. 11. The OLT 11 includes the dynamic bandwidth configuration apparatus 600 shown in FIG. 12.

Specifically, the ONU 13 is configured to determine length information of at least one data packet in a cache queue of a transmission container T-CONT; determine, according to the length information of the at least one data packet, a total length of at least one GEM frame that is corresponding to the at least one data packet and is obtained when the at least one data packet is separately encapsulated into a GEM frame; and send an uplink dynamic bandwidth report DBRu to the OLT 11 according to the total length of the at least one GEM frame and by using the ODN 12.

The OLT 11 is configured to receive the DBRu that is sent by the ONU 13 by using the ODN 12, where the DBRu carries a length of a GEM frame corresponding to a data packet in the transmission container T-CONT of the ONU 13; and assign bandwidth to the T-CONT according to the DBRu.

Optionally, the passive optical network system may include multiple ONUs 13, at least one OLT 11, and one ODN 12. Each OLT 11 in the at least one OLT 11 may interact with the at least one ONU 13 by using the ODN 12. For specific structures of the passive optical network system 10, the ONU 13, and the OLT 11, refer to descriptions, in the foregoing embodiments, of the dynamic bandwidth assignment apparatus 500 shown in FIG. 1a and FIG. 11 and of the dynamic bandwidth assignment apparatus 600 shown in FIG. 12. For brevity, details are not described herein again.

It should be understood that, the term "and/or" in this embodiment of the present invention describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may be aware that, in combination with the examples described in the embodiments disclosed in this specification, method steps and units may be implemented by electronic hardware, computer software, or a combination thereof. To clearly describe the interchangeability between the hardware and the software, the foregoing has generally described steps and compositions of each embodiment according to functions. Whether the functions are performed by hardware or software depends on particular applications and design constraint conditions of the technical solutions. A person of ordinary skill in the art may use different methods to implement the described functions for each particular application, but it should not be considered that such implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, multiple units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on multiple network units. A part or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The computer software product is stored in a storage medium and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (Read-Only Memory, ROM for short), a random access memory (Random Access Memory, RAM for short), a magnetic disk, or an optical disc.

The foregoing descriptions are merely specific embodiments of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A dynamic bandwidth assignment method on a passive optical network PON comprising:

   determining length information of at least one data packet in a cache queue of a transmission container T-CONT;
   determining, according to the length information of the at least one data packet, a total length of at least one GEM frame that is corresponding to the at least one data packet and is obtained when the at least one data packet is separately encapsulated into a gigabit passive optical network encapsulation method GEM frame; and
   sending an uplink dynamic bandwidth report DBRu to an optical line terminal OLT according to the total length of the at least one GEM frame, so that the OLT assigns bandwidth to the T-CONT according to the DBRu.

2. The dynamic bandwidth assignment method according to claim 1, wherein the length information of the at least one data packet comprises length information of each data packet in the at least one data packet; and
   the determining, according to the length information of the at least one data packet, a total length of at least one GEM frame that is corresponding to the at least one data packet and is obtained when the at least one data packet is separately encapsulated into a GEM frame comprises:

   determining that a length of a GEM frame corresponding to each data packet in the at least one data packet is a sum of a length of each data packet and a length of a GEM frame header; and
   determining that the total length of the at least one GEM frame corresponding to the at least one data packet is equal to a sum of the lengths of the GEM frames corresponding to all the data packets.

3. The dynamic bandwidth assignment method according to claim 1, wherein the length information of the at least one data packet comprises total length information of the at least one data packet; and
   the determining, according to the length information of the at least one data packet, a total length of at least one GEM frame that is corresponding to the at least one data packet and is obtained when the at least one data packet is separately encapsulated into a GEM frame comprises:

   determining that the total length of the at least one GEM frame corresponding to the at least one data packet is equal to a total length of the at least one data packet plus a product of a quantity of the at least one data packet and a length of a GEM frame header.

4. The dynamic bandwidth assignment method according to any one of claims 1 to 3, wherein before the sending an uplink dynamic bandwidth report DBRu to an OLT according to the total length of the at least one GEM frame, the method further comprises:

   sending dynamic bandwidth report DBR reporting capability information of an optical network unit ONU to the OLT, wherein the DBR reporting capability information is used by the OLT to determine a DBR reporting policy for the ONU; and
   receiving the DBR reporting policy sent by the OLT, wherein the DBR reporting policy instructs the ONU to report and transmit, in the DBRu, the total length of the at least one GEM frame corresponding to the at least one data packet in the cache queue of the T-CONT in the ONU; and
   the sending an uplink dynamic bandwidth report DBRu to an OLT according to the total length of the at least one GEM frame comprises:

   sending the uplink dynamic bandwidth report DBRu to the OLT according to the DBR reporting policy and the total length of the at least one GEM frame.

5. The dynamic bandwidth assignment method according to any one of claims 1 to 4, wherein each data packet in the at least one data packet is an integrated data packet or a data packet fragment.

6. A dynamic bandwidth assignment method on a passive optical network PON, comprising:

   receiving an uplink dynamic bandwidth report DBRu sent by an optical network unit ONU, wherein the DBRu carries a length of a GEM frame corresponding to a data packet in a transmission container T-CONT of the ONU; and
   assigning bandwidth to the T-CONT according to the DBRu.

7. The dynamic bandwidth assignment method according to claim 6, wherein the length of the GEM frame corresponding to the data packet is equal to a sum of a length of the data packet and a length of a GEM frame header.

8. The dynamic bandwidth assignment method according to claim 6 or 7, wherein the assigning bandwidth to the T-CONT according to the DBRu comprises:

   determining, according to the length that is of the GEM frame and is carried in the DBRu, bandwidth requested for the T-CONT; and
   assigning the bandwidth to the T-CONT according to bandwidth configured for the T-CONT, the bandwidth requested for the T-CONT, and bandwidth requested for another T-CONT.

9. The dynamic bandwidth assignment method according to any one of claims 6 to 8, wherein before the receiving a DBRu sent by an ONU, the method further comprises:

   receiving dynamic bandwidth report DBR reporting capability information sent by the ONU;
   determining a DBR reporting policy for the ONU according to the DBR reporting capability information, wherein the DBR reporting policy instructs the ONU to report, in the DBRu, the length of the GEM frame corresponding to the data packet of the T-CONT in the ONU; and
   sending the DBR reporting policy to the ONU, so that the ONU reports the DBRu according to the DBR reporting policy.

10. A dynamic bandwidth assignment apparatus on a passive optical network PON, comprising:

    a first determining module, configured to determine length information of at least one data packet in a cache queue of a transmission container T-CONT;
    a second determining module, configured to determine, according to the length information that is of the at least one data packet and is determined by the first determining module, a total length of at least one GEM frame that is corresponding to the at least one data packet and is obtained when the at least one data packet is separately encapsulated into a gigabit passive optical network encapsulation method GEM frame; and
    a sending module, configured to send an uplink dynamic bandwidth report DBRu to an optical line terminal OLT according to the total length that is of the at least one GEM frame and is determined by the second determining module, so that the OLT assigns bandwidth to the T-CONT according to the DBRu.

11. The dynamic bandwidth assignment apparatus according to claim 10, wherein the length information of the at least one data packet comprises length information of each data packet in the at least one data packet; and
    the second determining module is specifically configured to determine that a length of a GEM frame corresponding to each data packet in the at least one data packet is a sum of a length of each data packet and a length of a GEM frame header; and determine that the total length of the at least one GEM frame corresponding to the at least one data packet is equal to a sum of the lengths of the GEM frames corresponding to all the data packets.

12. The dynamic bandwidth assignment apparatus according to claim 10, wherein the length information of the at least one data packet comprises total length information of the at least one data packet; and
    the second determining module is specifically configured to:

    determine that the total length of the at least one GEM frame corresponding to the at least one data packet is equal to a total length of the at least one data packet plus a product of a quantity of the at least one data packet and a length of a GEM frame header.

13. The dynamic bandwidth assignment apparatus according to any one of claims 10 to 12, wherein the sending module is further configured to:

    before sending the uplink dynamic bandwidth report DBRu to the OLT according to the total length that is of the at least one GEM frame and is determined by the second determining module, send dynamic bandwidth report DBR reporting capability information of an optical network unit ONU to the OLT, wherein the DBR reporting capability information is used by the OLT to determine a DBR reporting policy for the ONU; and
    the dynamic bandwidth assignment apparatus further comprises:

       a receiving module, configured to receive the DBR reporting policy sent by the OLT, wherein the DBR reporting policy instructs the ONU to report and transmit, in the DBRu, a length of a GEM frame corresponding to the cache queue of the T-CONT in the ONU; wherein

the sending module is further configured to send the uplink dynamic bandwidth report DBRu to the OLT according to the DBR reporting policy received by the receiving module and the total length that is of the at least one GEM frame and is determined by the second determining module.

14. The dynamic bandwidth assignment apparatus according to any one of claims 10 to 13, wherein each data packet in the at least one data packet is an integrated data packet or a data packet fragment.

15. A dynamic bandwidth assignment apparatus on a passive optical network PON, comprising:

a receiving module, configured to receive an uplink dynamic bandwidth report DBRu sent by an optical network unit ONU, wherein the DBRu carries a length of a GEM frame corresponding to a data packet in a transmission container T-CONT of the ONU; and

an assignment module, configured to assign bandwidth to the T-CONT according to the DBRu received by the receiving module.

16. The dynamic bandwidth assignment apparatus according to claim 15, wherein the length of the GEM frame corresponding to the data packet is equal to a sum of a length of the data packet and a length of a GEM frame header.

17. The dynamic bandwidth assignment apparatus according to claim 15 or 16, wherein the assignment module comprises:

a determining unit, configured to determine, according to the length that is of the GEM frame and is carried in the DBRu, bandwidth requested for the T-CONT; and

an assignment unit, configured to assign the bandwidth to the T-CONT according to bandwidth configured for the T-CONT, the bandwidth that is requested for the T-CONT and is determined by the determining unit, and bandwidth requested for another T-CONT.

18. The dynamic bandwidth assignment apparatus according to any one of claims 15 to 17, wherein the receiving module is further configured to: before receiving the DBRu sent by the ONU, receive dynamic bandwidth report DBR reporting capability information sent by the ONU; and

the dynamic bandwidth assignment apparatus further comprises:

a determining module, configured to determine a DBR reporting policy for the ONU according to the DBR reporting capability information received by the receiving module, wherein the DBR reporting policy instructs the ONU to report, in the DBRu, a length of a GEM frame corresponding to a cache queue of the T-CONT in the ONU; and

a sending module, configured to send the DBR reporting policy determined by the determining module to the ONU, so that the ONU reports the DBRu according to the DBR reporting policy.

19. A passive optical network system, wherein the passive optical network comprises an optical line terminal, an optical distribution network, and an optical network unit, wherein the optical line terminal is connected to the optical network unit by using the optical distribution network, the optical line terminal comprises the dynamic bandwidth assignment apparatus according to any one of claims 15 to 18, and the optical network unit comprises the dynamic bandwidth assignment apparatus according to any one of claims 10 to 14.

<u>10</u>

FIG. 1a

| Determine length information of at least one data packet in a cache queue of a transmission container T-CONT | 110 |

↓

| Determine, according to the length information of the at least one data packet, a total length of at least one GEM frame that is corresponding to the at least one data packet and is obtained when the at least one data packet is separately encapsulated into a gigabit passive optical network encapsulation method GEM frame | 120 |

↓

| Send an uplink dynamic bandwidth report DBRu to an optical line terminal OLT according to the total length of the at least one GEM frame, so that the OLT assigns bandwidth to the T-CONT according to the DBRu | 130 |

FIG. 1

Determine that a length of a GEM frame corresponding to each data packet in the at least one data packet is a sum of a length of each data packet and a length of a GEM frame header

121

Determine that the total length of the at least one GEM frame corresponding to the at least one data packet is equal to a sum of the lengths of the GEM frames corresponding to all the data packets

122

FIG. 2

Send dynamic bandwidth report DBR reporting capability information of an optical network unit ONU to the OLT, where the DBR reporting capability information is used by the OLT to determine a DBR reporting policy for the ONU

140

Receive the DBR reporting policy sent by the OLT, where the DBR reporting policy instructs the ONU to report and transmit, in the DBRu, a length of a GEM frame corresponding to the cache queue of the T-CONT in the ONU

150

Send the uplink dynamic bandwidth report DBRu to the OLT according to the DBR reporting policy and the total length of the at least one GEM frame

131

FIG. 3

FIG. 4

Receive an uplink dynamic bandwidth report DBRu sent by an optical network unit ONU, where the DBRu carries a length of a GEM frame corresponding to a data packet in a transmission container T-CONT of the ONU ⟩~210

Assign bandwidth to the T-CONT according to the DBRu ⟩~220

FIG. 5

Receive dynamic bandwidth report DBR reporting capability information sent by the ONU ⟩~230

Determine a DBR reporting policy for the ONU according to the DBR reporting capability information, where the DBR reporting policy instructs the ONU to report, in the DBRu, a length of a GEM frame corresponding to the cache queue of the T-CONT in the ONU ⟩~240

Send the DBR reporting policy to the ONU, so that the ONU reports the DBRu according to the DBR reporting policy ⟩~250

FIG. 6

First determining
module 310

Second determining
module 320

Sending module 330

300

FIG. 7

Receiving module 340

Second determining
module 320

Sending module 330

300

FIG. 8

Receiving module 410

Assignment module 420

400

FIG. 9

Receiving module 410

Determining module 430

Sending module 440

400

**FIG. 10**

Processor 510

Transmitter 520

Receiver 530

500

**FIG. 11**

Receiver 610

Processor 620

Transmitter 630

600

**FIG. 12**

<div align="center">

# INTERNATIONAL SEARCH REPORT

</div>

| | International application No. |
|---|---|
| | **PCT/CN2013/089241** |

## A. CLASSIFICATION OF SUBJECT MATTER

H04L 12/917 (2013.01) i

According to International Patent Classification (IPC) or to both national classification and IPC

## B. FIELDS SEARCHED

Minimum documentation searched (classification system followed by classification symbols)

H04L, H04B, H04Q

Documentation searched other than minimum documentation to the extent that such documents are included in the fields searched

Electronic data base consulted during the international search (name of data base and, where practicable, search terms used)

CPRSABS, CNTXT, CNKI: passive optical network, PON, transmission container, data, message, length, encapsulation, GEM, frame, bandwidth, assignment, dynamic

VEN: passive optical network, transmission content, data, message, length, encapsulat+, frame, bandwidth, assignment, dynamic

## C. DOCUMENTS CONSIDERED TO BE RELEVANT

| Category* | Citation of document, with indication, where appropriate, of the relevant passages | Relevant to claim No. |
|---|---|---|
| A | CN 101087238 A (HUAWEI TECHNOLOGIES CO., LTD.), 12 December 2007 (12.12.2007), the whole document | 1-19 |
| A | CN 101043294 A (HUAWEI TECHNOLOGIES CO., LTD.), 26 September 2007 (26.09.2007), the whole document | 1-19 |
| A | CN 1614944 A (BEIJING UNIVERSITY OF POSTS AND TELECOMMUNICATIONS et al.), 11 May 2005 (11.05.2005), the whole document | 1-19 |
| A | CN 101753421 A (ZTE CORP.), 23 June 2010 (23.06.2010), the whole document | 1-19 |

☐ Further documents are listed in the continuation of Box C.     ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 22 May 2014 (22.05.2014) | **28 May 2014 (28.05.2014)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **LI, Zhenhua** Telephone No.: (86-10) **62087678** |
|---|---|

Form PCT/ISA/210 (second sheet) (July 2009)

## INTERNATIONAL SEARCH REPORT
### Information on patent family members

| International application No. |
| --- |
| **PCT/CN2013/089241** |

| Patent Documents referred in the Report | Publication Date | Patent Family | Publication Date |
| --- | --- | --- | --- |
| CN 101087238 A | 12 December 2007 | CN 101087238 B | 04 August 2010 |
| CN 101043294 A | 26 September 2007 | CN 100581090 C | 13 January 2010 |
| CN 1614944 A | 11 May 2005 | CN 1320803 C | 06 June 2007 |
| CN 101753421 A | 23 June 2010 | CN 101753421 B | 19 December 2012 |

Form PCT/ISA/210 (patent family annex) (July 2009)